# EUROPÄISCHE PATENTANMELDUNG

(11) **EP 4 043 720 A1**
(43) Veröffentlichungstag der Anmeldung: **17.08.2022**
(21) Anmeldenummer: 21000050.1
(22) Anmeldetag: 16.02.2021
(51) Int. Cl.: F03D 9/37, F03D 9/00, F03D 9/18

(54) **UMWELTKRAFTWERK**

(71) Anmelder: Lein, Dennis, 35435 Wettenberg (DE)
(72) Erfinder: Lein, Dennis, 35435 Wettenberg (DE)

(57) **Zusammenfassung**

Der vorliegende Patentantrag zeigt, dass die Technologie des Aufwindkraftwerkes mit Hilfe verschiedener zusätzlicher Energiequellen kombiniert und dadurch optimiert werden kann. Durch den gezeigten Aufbau kann sowohl die Thermik im Aufwindkanal verbessert, als auch die Technologie des Direct Air Capture kostengünstig integriert werden. Die Kombination aus Siede, Energieerzeugung und CO²-Abspaltung schafft die Möglichkeit, mit herkömmlichen Technologien wie dem Sabatier-Prozess die gewonnenen Stoffe so zu verarbeiten, dass sie als Energieträger CH4 (Kohlenwasserstoff) ins Erdgasnetz eingespeist werden können. Das Auffangen des siedenden Wassers im Kondenswasserbehälter eröffnet die Möglichkeit, Wasser in das Trinkwassernetz einzuspeisen. Dadurch bietet diese Technologie die Möglichkeit, aktuelle Probleme des Klimawandels (CO²-Emission, Wassermangel, steigender Strombedarf, Bedarf an erneuerbaren Energien und klimaneutralen Kraftstoffen) durch die Bereitstellung von Wasser, Strom, Fernwärme und methanisiertem Wasserstoff sowie CO² für die weitere Nutzung in Lagerstätten zu minimieren.

Dabei werden bereits vorhandene Technologien kombiniert und optimiert, sodass eine umweltschonende und umweltförderliche Energieerzeugung entsteht. Daher die Bezeichnung "Umweltkraftwerk".

## Beschreibung

Die Erfindung basiert auf dem derzeitigen Stand der Wissenschaft aus den Bereichen Physik, Chemie sowie den Diskussionen aus dem Bereich des Geoengineering. Die technische Aufgabe ist die energieneutrale Säuberung der Atmosphäre von CO² und dessen weitere Verwendung, die Nutzbarmachung von Meerwasser zur Verwendung an Land, sowie die Produktion von

Wasserstoff aus dem gewonnenen Strom zur weiteren Verwendung bei der Methanisierung. Die Nutzung aller in der Umwelt vorhandenen Energie zum Erreichen einer größtmöglichen Energieausbeute und Wirkungsgrad der Anlage stehen dabei im Vordergrund.

### Der bisherige Stand der Technik:

**Aufwindkraftwerke** nutzen die Sonnenenergie, um am Fuße des Kraftwerkes eine Fläche zu erhitzen. Die Luft erwärmt sich und wird durch den **Kamineffekt** (siehe Quelle 16) durch den Aufwindkanal nach oben gesogen. Durch die Nutzung der Thermik für die natürliche Konvektion wird das Aufwindkraftwerk vereinzelt auch Thermikkraftwerk genannt. Die Luftströmung treibt einen oder mehrere Generatoren an.

Die Firmen Blue Pearl und EnviroMission sind derzeit Marktführer auf dem Gebiet der Aufwindkraftwerke.

Bei der **CO²-Abscheidung** wird (z.B. durch die Firma Climeworks; Quelle 1) durch Ventilatoren Luft angesogen um diese von Kohlendioxid (CO²) zu reinigen. Dies geschieht zum Beispiel durch die Aminwäsche: "Bei der Aminwäsche werden leicht alkalische wässrige Lösungen von Aminen (zumeist Ethanolamin-Derivate) eingesetzt, die saure Gaskomponenten reversibel chemisch absorbieren. In den Absorber wird bei niedriger Temperatur (ca. 40 °C)[2] und leicht erhöhtem Druck (ca. 8 bar)[2] frische Aminlösung vom Kopf zugeführt. Von unten wird das zu reinigende Gas in die Trennkolonne geleitet. Durch die chemische Reaktion des absorbiertem CO2 mit der Aminlösung wird Energie in Form von Wärme frei gesetzt[1]. Das gereinigte Gas verlässt die Kolonne am Kopf und das beladene Waschmittel (Aminlösung) wird am Sumpf der Kolonne in den Desorber gepumpt.

Im Desorber wird bei hoher Temperatur (Einsatz von thermischer Energie) und niedrigem Druck die Reaktion das chemische Gleichgewicht umgekehrt und somit das gebundene saure Gas dem Waschmittel entzogen. Am Kopf des Desorbers kann somit das reine Gas (mit feuchten Bestandteilen) abgezogen werden. Durch einen Kondensator werden die Anteile an Waschmittel und Wasser vom Gasstrom abgetrennt und der Kolonne wieder zugeführt.
Durch die nachgeschaltete Regeneration des Waschmittels kann das gebundene Gas hoch konzentriert gewonnen werden. Dies macht eine spätere stoffliche Nutzung von z. B. CO2 [3] oder H2S (Claus-Prozess) möglich. Dies ist mit anderen Methoden wie der Druckwasserwäsche nicht möglich." (Quelle: "Verschiedene Waschverfahren befinden sich in der Erprobung. Auch hier ist offen, welches Verfahren sich für den großtechnischen Einsatz durchsetzen könnte. In der Erdgasaufbereitung (nicht aber im Kraftwerksbereich) großtechnisch bekannt ist die Aminwäsche. Bei der Aminwäsche wird das CO2 bei 27 °C an den Träger, fein verteilte Amin-Tröpfchen, angelagert. In einem zweiten Schritt gelangen die Amine in einen Abscheider (Stripper), wo sie bei 150 °C das CO2 in konzentrierter Form wieder abgeben und anschließend dem Prozess wieder zugeführt werden. Amine gelten als die dritthäufigste Ursache für arbeitsplatzbedingte Krebserkrankungen; diese Abscheidetechnik wäre für Arbeiter und Bevölkerung wohl mit erheblichen Risiken verbunden. Solche Emissionen sind bei Einsatz nicht flüchtiger Amine wie z. B. der Aminosäuren Prolin oder Sarcosin nicht zu erwarten[5]. Ab 2009 wurde im Kraftwerk Staudinger ein solches, auf einer Aminosäuresalzlösung basierendes Verfahren erprobt. Der Wirkungsgrad allein des Kraftwerks sank um sechs Prozentpunkte (6 %), die CO2-Abscheideleistung betrug über 90 %[6]." (Quelle: 27)
Das Problem dabei ist der Energieaufwand zum Betreiben der Ventilatoren. Ohne den Einsatz erneuerbarer Energien ist eine CO²-neutrale Abscheidung nicht möglich. Die beiden derzeitigen Marktführer Carbon Engineering und Climeworks arbeiten dabei mit unterschiedlichen Verfahren. Climeworks benötigt keinen zusätzlichen Wasserinput und die Aminwäsche erfolgt bei ca. 100 Grad Celsius bei Unterdruck. Vorteil dieser Anlage ist es, dass einzelne Module (DAC-1) vorhanden sind, die als eigenständiges Gerät verbaut werden können. (Vgl. Quelle 23)

Die **Entsalzung von Meerwasser** stellt auf lange Sicht den einzigen Weg dar, den wachsenden Wasserverbrauch auf der Erde zu speisen. Während Länder wie Saudi-Arabien als Energiequelle für die mehrstufige Entspannungsverdampfung (Quelle 3) Öl und Gas verwenden und dadurch mehr CO² produzieren, sind Verfahren mit Hilfe von erneuerbaren Energien rar gesät. Siedeverfahren mit Hilfe von erneuerbaren Energien konnten während der Recherche nicht gefunden werden.
**Parabolrinnen** können durch ihre Form die aufgefangene Insolation konzentrisch auf eine Linie reflektieren. Durch die Bündelung auf ein an der Rinne befestigtes Absorberrohr mit einem Wärmeträgermedium (z.B. Thermalöl) kann die Sonnenenergie mittels Pumpen über das Öl in Form von Hitze genutzt werden. Diese Energie kann auch in Form eines Pufferspeichers gespeichert werden. Die Kombination von Parabolrinnen mit anderen Energieerzeugungsmethoden erforscht derzeit das Deutsche Zentrum für Luft- und Raumfahrt (DLR, siehe Quelle 12). Die Nutzung von Parabolrinnen zur Meerwasserentsalzung vermittels einer Siede wurde noch nicht entwickelt. Global Player auf dem Gebiet der Parabolrinnen ist zum Beispiel die Firma Schott (Quelle 22).

Da das Kraftwerk eine große Höhe haben kann, ist die Nutzung von **Außenrotoren** eine weitere Möglichkeit der Windenergienutzung. Die Recherche ergab, dass zum Beispiel der Darrieus-Rotor oder andere Vertikalrotoren wie der **verdrillte Savonius-Rotor** (Quelle 5) als mögliche Energiequellen an der Außenseite des Turmes angebracht werden könnten. Diese Form des Widerstandsläufers funktioniert dadurch, dass der Wind an der nach außen ausgewölbten Seite abgelenkt, an der Innenwölbung jedoch aufgenommen wird. Dadurch entsteht ein geringer Widerstand an der Außenseite, eine höhere Energieaufnahme aber an der Innenseite des Rotorblattes. Der Rotor muss nicht in den Wind gedreht werden und kann auch geringe Windenergie aufnehmen.

Eine ähnliche Nutzung an einem Turm konnte nicht recherchiert werden. Dies setzt die Nutzung eines Ringgenerators voraus, dessen Pole an der Außenseite liegen. **Ringgeneratoren** stellt zum Beispiel die Firma Enercon her (Quelle 6).
**Aufwindgeneratoren** nutzen die Thermik im **Aufwindkraftwerk** und liefern Energie. Da bei der Verwendung von Siedewasser die Luft erhitzt und befeuchtet wird, ist die Verwendung einer Dampfturbine geeigneter. Die Verwendung einer Dampfturbine in einem Aufwindkraftwerk konnte nicht recherchiert werden. Ausgegangen wird von herkömmlichen **Dampfturbinen** (Quelle 7) auf dem neuesten Stand der Technik (z.B. Siemens Energy, Quelle 8). Der durchfließende Wasserdampf treibt hierbei ein Rotorblatt an, das über eine Getriebestange die Drehenergie für einen Generator liefert.

**Kondenswasserbehälter** zum Auffangen von verdampftem Wasser gibt es in kleinen Maßstäben. Aktuell werden auch Verfahren zur Wasserextraktion aus der Luft erbrobt (siehe Quelle 9). Auffangbehälter für Aufwindkraftwerke mit Siede konnten nicht recherchiert werden.

"Die **Durchströmturbine,** auch bekannt als Querstromturbine oder nach den Namen der Entwickler als Bánki-Turbine, Michell-Turbine oder Ossberger-Turbine, ist eine Wasserturbine, bei der das Wasser den Turbinenläufer anders als bei einer gewöhnlichen, axial oder radial durchströmten Turbine, quer durchströmt. Das Wasser tritt, ähnlich einem Wasserrad, am Umfang ein und nach Durchlaufen des Laufradinneren gegenüberliegend wieder aus. Durch den doppelten Aufschlag ergibt sich eine vergleichsweise bessere Wirkung und damit ein gewisser Selbstreinigungseffekt bzw. Schmutzresistenz. Die Durchströmturbine zählt nach ihrer spezifischen Drehzahl zu den Langsamläufern.

Die Turbine wurde parallel vom Ungarn Donát Bánki, vom Deutschen Fritz Ossberger und vom Australier Anthony George Maldon Michell entwickelt. Ossberger brachte diese Turbinenbauart zur Serienreife. Er patentierte 1922 eine "Freistrahlturbine"[1] und 1933 die "Durchströmturbine"[2]. Das von ihm gegründete Unternehmen ist heute führender Hersteller dieses Turbinentyps." (Quelle: 10)

Die Verwendung der Durchströmturbine in Kombination mit einem Aufwindkraftwerk und dem Kondenswasserbehälter (sowie der Siede) konnte nicht recherchiert werden. Marktführer auf dem Gebiet ist die Firma Ossberger.

Die Nutzung von **Geothermie** zur Energieerzeugung oder als Fernwärme ist weitgehend bekannt. Dabei wird z.B. über zwei Erdbohrungen in gleicher Tiefe ein Kreislauf aufgebaut. Über die erste Leitung wird Oberflächenwasser in den Boden gepumpt, über die zweite Leitung das heiße Wasser nach oben befördert. Die Energie des heißen Wassers kann mittels Wärmetauscher für die Stromerzeugung in z.B. Dampfgeneratoren oder für die Fernwärmeversorgung genutzt werden.

Die Nutzung von Erdwärmeenergie in Kombination mit einem Aufwindkraftwerk konnte nicht recherchiert werden.

Die **Nutzung von Blitzenergie** für die Stromerzeugung wurde bereits vergeblich versucht (Quelle 11). Allerdings ist bei der Höhe des Umweltkraftwerkes mit Blitzeinschlägen zu rechnen. Eine Nutzung für die Erhitzung von Wasser und die weitere Verwendung in einem Kraftwerk konnte nicht recherchiert werden.

Die **Elektrolyse** (Quelle 18) wird derzeit für die zukünftige Energieversorgung im privaten und wirtschaftlichen Segment auch im industriellen Maßstab betrieben (Quelle 17). "Durch zwei Elektroden wird ein elektrischer Gleichstrom in eine leitfähige Flüssigkeit (siehe Elektrolyt) geleitet. An den Elektroden entstehen durch die Elektrolyse Reaktionsprodukte aus den im Elektrolyt enthaltenen Stoffen" (Quelle 18).

Der bei der **Wasserelektrolyse** entstehende Wasserstoff kann als Energieträger in Wasserstoffautomobilen oder zur Stromerzeugung genutzt werden. Dieser Prozeß verläuft exotherm. Eine Speicherung von Wasserstoff ist im flüssigen, gasförmigen oder gebundenen Zustand (an Metallhydride oder organisch gebunden - Liquid Organic Hydrogen Carrier) möglich (Vgl. Quelle 28). Durch den "Green Deal" der EU-Kommission soll die Europäische Union bis zum Jahr 2050 keine netto-CO²-Emissionen mehr ausstoßen. Da hierfür Energie benötigt wird, die möglichst CO²-Neutral entsteht liegt die Nutzung der erneuerbaren Energie auf der Hand. Die Kombination von Elektrolyse und Aufwindkraftwerk konnte jedoch nicht recherchiert werden. Ein global Player auf diesem Gebiet ist die Firma ThyssenKrupp.

Eine Möglichkeit der Nutzung des durch die Direct Air Capture Methode gewonnenen CO² stellt die **Methanisierung** dar. Hierbei wird in einer exothermen Reaktion Wasserstoff mit Kohlendioxid zu Methan verbunden:

*CO₂* + 4*H*₂ → *CH*₄ + 2*H*₂0

Im Bereich **"Power to gas"** (Quelle 21) werden derzeit viele Forschungseinrichtungen und Prototypen entworfen, die allesamt das Ziel verfolgen, die Elektrolyse und anschließende Methanisierung wirtschaftlich zu betreiben. Das Methan wird gespeichert, in das Gasnetz eingespeichert oder direkt an den Endkunden (Autofahrer oder Wirtschaftsbetriebe) geliefert. So bietet zum Beispiel die Kooperation aus Audi, SolarFuel GmbH, dem Zentrum für Sonnenenergie und Wasserstoff-Forschung (ZSW) in Stuttgart, dem Fraunhofer Institut für Windenergie und Energiesystemtechnik (IWES) in Kassel und der EWE Energie AG methanisierten Wasserstoff in Deutschland an (Quelle: 24). Die Firma Ineratec bietet kompakte Reaktoren zur Methanolsynthese an.

### Welche technische Aufgabe soll gelöst werden? Eine Hybridlösung aus allen vorgestellten Bereichen aufzuzeigen und Synergieeffekte zu nutzen:

### Das Umweltkraftwerk

Das hier beschriebene Umweltkraftwerk nutzt alle in der Umwelt bestehenden Energien gebündelt auf oder an einem Aufwindkraftwerk. Die erfinderische Tätigkeit besteht darin, die Nutzbarkeit des Aufwindkraftwerkes zu verbessern und gleichzeitig verschiedene Wege zur Energieverwendung aufzuzeigen sowie Synergieeffekte zu nutzen. Durch den Entzug von CO² aus der Atmosphäre kann diese Erfindung dem Klimawandel entgegenwirken und durch das Bereitstellen von Trinkwasser dem Wassermangel in vielen Regionen der Erde. Dadurch erhält dieser Ansatz eine höhere Energieschöpfung und eine diversifizierte Nutzung von Energie und den gewonnenen Rohstoffen durch verschiedene Abgabe- und Speicherformen.

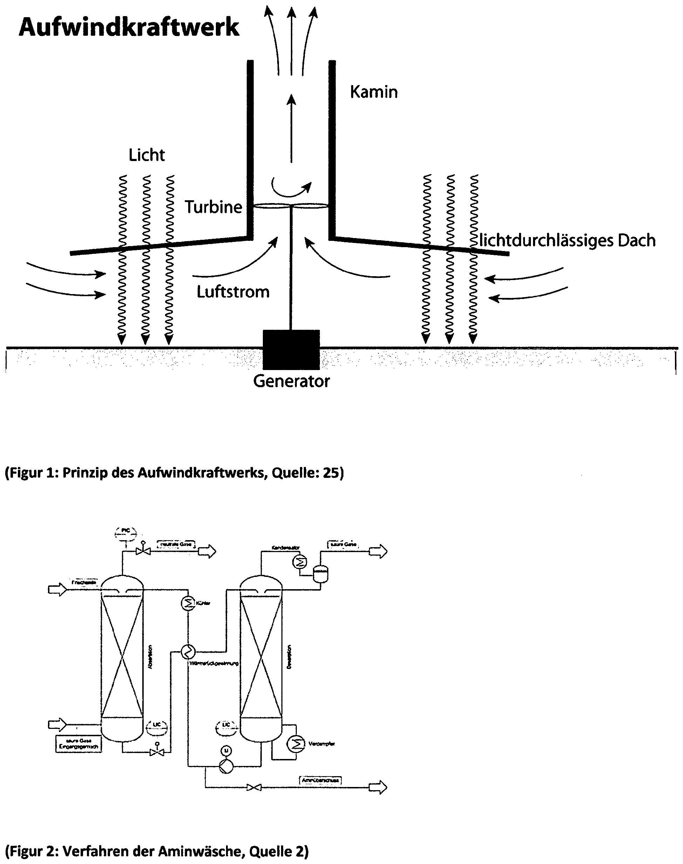

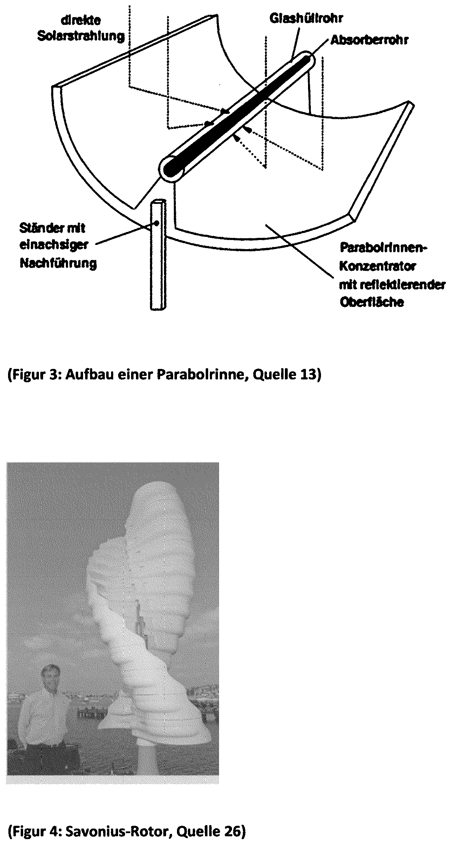

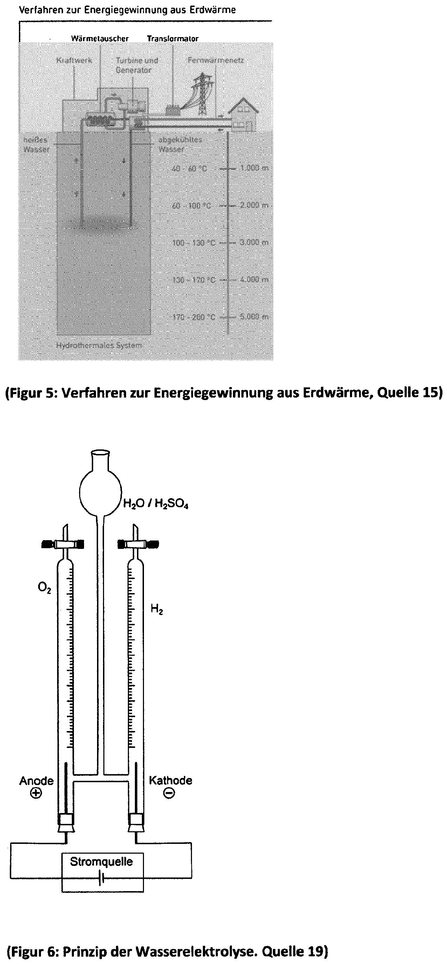

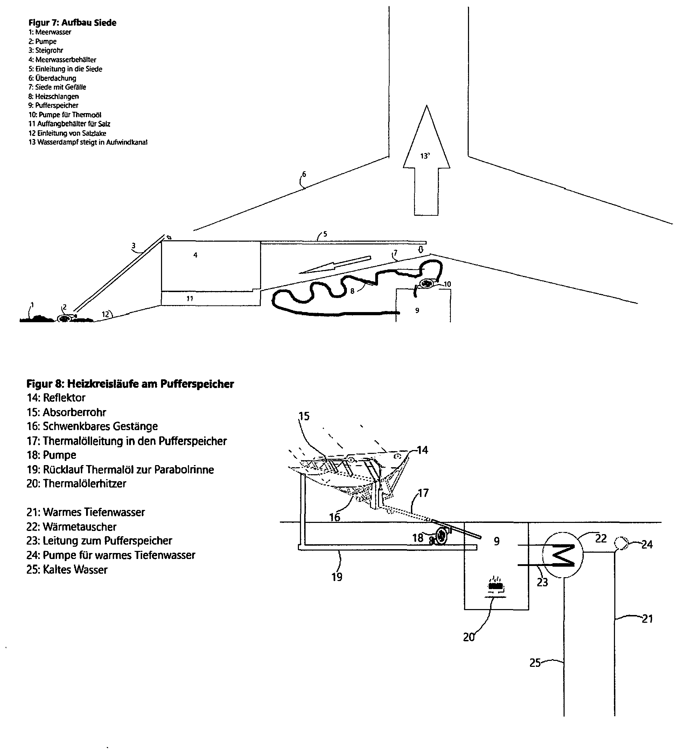

### Figur 7: Aufbau Siede

Zunächst wird **Meerwasser(1)** über eine **Pumpe (2)** in ein **Steigrohr (3)** gepumpt. Von dort aus fließt es in einen **Meerwasserbehälter (4)** und fließt dann über Rohr zur **Einleitung** in die **Siede (5),** wo es auf die Siedefläche unter der **Überdachung (6)** mit den **Heizschlangen (8)** fällt. Diese durch **Heizschlangen (8)** erhitzte **Siede mit Gefälle (7)** fällt Fuß des Turms hin zum **Auffangbehälter für Salz (11)** und weiter zur **Einleitung von Salzlake (12)** in das Meer hin ab, sodass keine Pumpen nötig sind und Schwerkraft und Wasserstoffbrückenbindung die Arbeit erledigen. Gleichzeitig liegt dieser Bereich unter einer Überdachung (6) mit ähnlichem Gefälle, sodass die entstehende Luftfeuchtigkeit den Weg in den Aufwindkanal nimmt. Der **Wasserdampf steigt in den Aufwindkanal (13).** Die Wärme für die Heizschlangen wird aus einem **Pufferspeicher (9)** mit Thermoöl entnommen und über **Pumpe für Thermoöl (10)** in die Heizschlangen geführt und wieder in den Pufferspeicher zurück geleitet. Dadurch entsteht ein Heizkreislauf für die Siede.

### Figur 8: Heizkreisläufe am Pufferspeicher

Die Heizschlangen der Siede werden mit Hilfe von **Thermoöl** erhitzt, welches auf zwei Wegen seine erhöhte Temperatur erhält:
Zum einen wird das Thermoöl durch Parabolrinnen gepumpt, an denen Sonnenlicht von einem **Reflektor (14)** auf ein **Absorberrohr (15)** am Brennpunkt reflektiert wird. Um den Sonnenstand optimal zu nutzen ist die Parabolrinne an einem **schwenkbaren Gestänge (16)** justierbar. Von dort aus wird es über eine **Pumpe (18)** in die **Thermalölleitung in den Pufferspeicher (17)** an den **Pufferspeicher (9)** im Sockel des Turmes weitergeleitet und von dort aus über die **Pumpe für Thermoöl (10)** in die **Heizschlangen (8)** gepumpt **(1. Heizkreislauf).** Ein Kreislauf entsteht dadurch, dass die **Pumpe (18)** das Thermoöl aus dem **Pufferspeicher (9)** in den **Rücklauf Thermalöl zur Parabolrinne (19)** pumpt und somit der Kreislauf entsteht.

Zum anderen wird die **Erdwärmeenergie** genutzt, indem **warmes Tiefenwasser (21)** über eine **Pumpe für warmes Tiefenwasser (24)** aus tiefen Erdschichten gefördert wird. Dies warme Wasser wird an einen **Wärmetauscher (22)** abgegeben, der den **Pufferspeicher (9)** über die **Leitung zum Pufferspeicher (23)** mit Wärme versorgt. Das **kalte Wasser (25)** aus dem **Wärmetauscher (22)** fließt danach wieder in die gleiche Tiefe zurück um einen Kreislauf entstehen zu lassen. Für den Fall eines Wärmemangels im **Pufferspeicher (9)** steht ein **Thermalölerhitzer (20)** im Pufferspeicher zur Verfügung, der den Pufferspeicher mit Wärme versorgen kann.

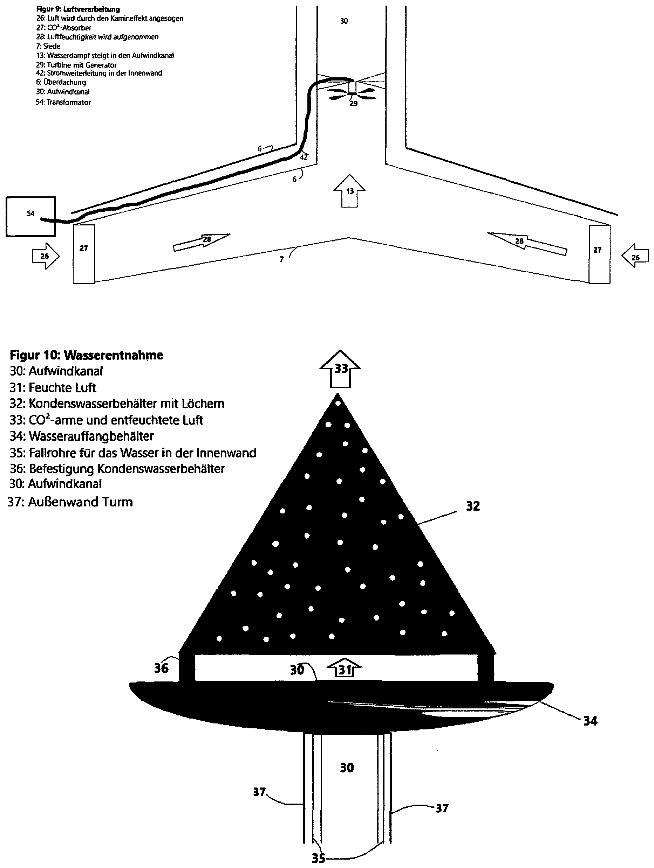

### Figur 9: Luftverarbeitung

Der Weg der Luft in den **Aufwindkanal (30)** führt am **CO²-Absorber (27)** vorbei. Durch den Unterdruck im **Aufwindkanal** (je höher der Turm, desto größer der Druckunterschied und der Kamineffekt) wird die **Luft durch den Kamineffekt angesogen (26).** In der **Siede (7)** wird die **Luftfeuchtigkeit aufgenommen (28)** und der **Wasserdampf steigt in den Aufwindkanal (13).** Im Aufwindkanal (30) treibt die aufsteigende Luft eine **Turbine mit Generator (29)** an, deren Generator den erzeugten Strom an die **Stromweiterleitung in der Innenwand (42)** abgibt. Der Strom wird zwischen den **Überdachungen (6)** nach außen geleitet und steht dann über den **Transformator (54)** zur weiteren Nutzung zur Verfügung.

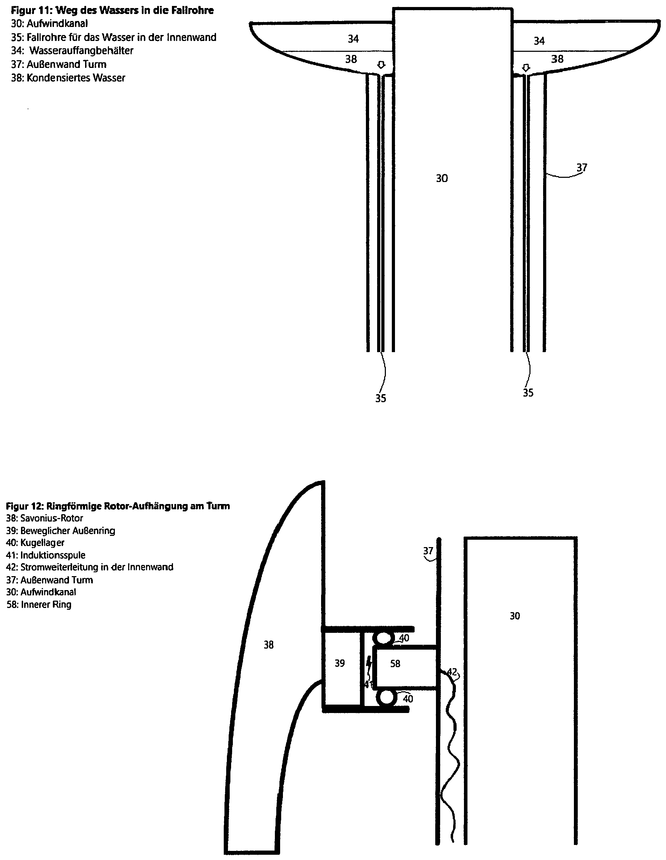

### Figur 10: Wasserentnahme und Figur 11: Weg des Wassers in die Fallrohre

Am **Kondenswasserbehälter mit Löchern (32)** kondensiert das Wasser und wird aufgefangen. Dies geschieht dadurch, dass die warme und **feuchte Luft (31)** aus dem **Aufwindkanal (30)** kommend an der kegelförmigen Spitze kondensiert (Oberfläche ist kühler) und an der Innenseite nach unten rinnt. Um den Druckunterschied im Aufwindkanal aufrecht zu erhalten muss diese Form Löcher haben, damit die Luft entweichen kann. Diese müssen in der Fläche (Variablen Größe und Anzahl) so groß sein, dass der im Aufwindkanal entstehende Unterdruck nicht abbricht. Gleichzeitig wird über die Höhe der **Befestigung Kondenswasserbehälter (36)** - die in Form von Säulen ausgeführt wird - erreicht, dass der Kamineffekt im Aufwindkanal nicht zusammenbricht. Das Wasser rinnt vom **Kondenswasserbehälter mit Löchern (32)** in den breiteren **Wasserauffangbehälter (34).** Die Breite des **Wasserauffangbehälters (34)** ist größer als der **Kondenswasserbehälter mit Löchern (32)** damit kein Wasser an diesem vorbei tropft. Der **Wasserauffangbehälter (34)** umschließt dabei den Aufwindkanal wie eine Schale. Damit das Wasser nicht in den **Aufwindkanal (30)** läuft, endet dieser über der Oberkante des **Wasserauffangbehälters (34).** Am tiefsten Punkt des Wasserauffangbehälters neben dem **Aufwindkanal (30)** befinden sich Öffnungen. Dort wird das Wasser in die **Fallrohre für das Wasser in der Innenwand (35)** zwischen der **Außenwand des Turms (37)** und dem **Aufwindkanal (30)** abgelassen und steht dann für die weitere Verwendung in der **Durchströmturbine (46)** bereit. An die Umwelt wird **CO²-arme und entfeuchtete Luft (33)** abgegeben. Das **kondensierte Wasser (38)** wird weiterverwendet.

### Figur 12: Ringförmige Rotor-Aufhängung am Turm

Da das Kraftwerk über eine große Höhe besitzt, wird die Außenfläche des Turms für die Nutzung von Windkraft genutzt. Dazu werden z.B. verdrillte **Savonius-Rotoren (38)** an einem **beweglichen Außenring (39)** an der **Außenwand des Turms (37)** angebracht. Der bewegliche Außenring (Rotor) enthält die magnetischen Pole und wird über Kugellager am **inneren Ring (58),** dem Stator, vorbeigeführt. Durch die Drehbewegung erfolgt die Stromerzeugung an den **Induktionsspulen (41),** Kohlebürsten und Schleifringe geben die erzeugte Energie weiter. Der erzeugte Strom wird durch die **Stromweiterleitung in der Innenwand (42)** nach unten abgeführt und kann dann über den **Transformator (54)** weiterverwendet werden.

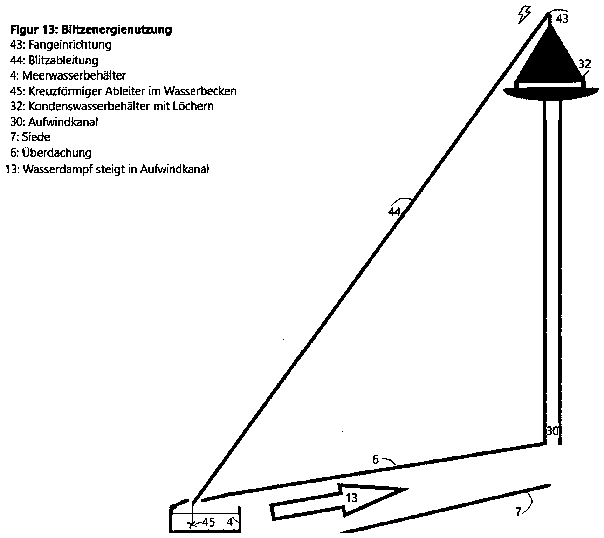

### Figur 13: Blitzenergienutzung

Bei der Höhe des Bauwerkes ist mit Blitzschlag zu rechnen. Dadurch ist ein Blitzableiter mit Erdungsanlage unumgänglich. Beim Umweltkraftwerk wird die Blitzenergie über die **Fangeinrichtung (43)** und die **Blitzableitung (44)** jedoch in einen **Meerwasserbehälter (4)** geleitet, in dem ein **kreuzförmiger Ableiter im Wasserbecken (45)** aus leitendem Metall schwimmt. Bei einem Blitzschlag wird die Energie des Blitzes in den **Meerwasserbehälter (4)** geleitet und erhitzt das Wasser. Der entstehende Wasserdampf steigt auf und wird unter der **Überdachung (6)** vorbei an der **Siede (7)** in Richtung des **Aufwindkanals (30)** geleitet. Dadurch **steigt der Wasserdampf in den Aufwindkanal (13),** wird die Stromerzeugung im **Aufwindkanal (30)** vermittels der **Turbine mit Generator (29)** durch den vermehrten Wasserdampfeintrag angetrieben und im **Kondenswasserbehälter mit Löchern (32)** wird mehr Wasser kondensieren. In der Folge wird im **Wasserauffangbehälter (34)** mehr kondensiertes Wasser in die **Fallrohre für das Wasser in der Innenwand (35)** strömen und die **Durchströmturbine (46)** stärker antreiben.

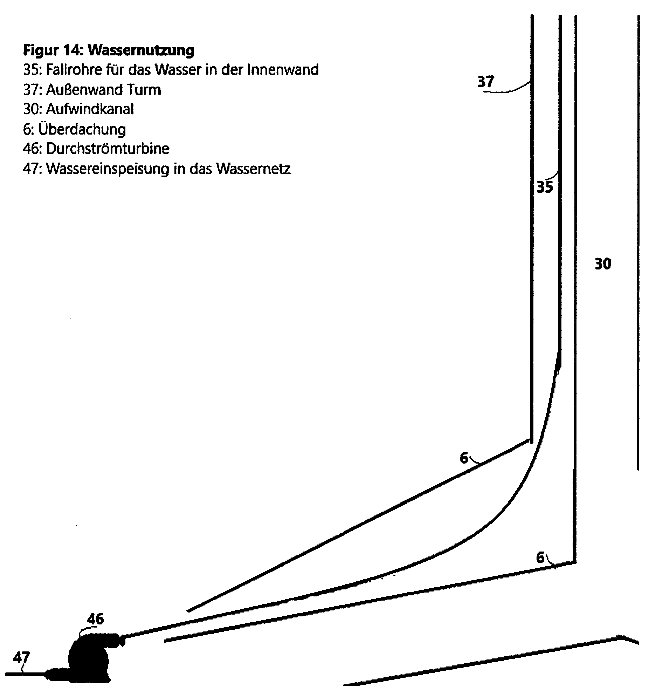

### Figur 14: Wassernutzung

Das **kondensierte Wasser (38)** aus dem **Wasserauffangbehälter (34)** fließt durch die **Fallrohre für das Wasser in der Innenwand (35)** zwischen der **Außenwand des Turms (37)** und dem **Aufwindkanal (30)** hinunter zum Sockel des Turms. Dort treibt es eine **Durchströmturbine (46)** an und erzeugt dadurch Strom. Das Wasser wird danach in das **Wassernetz eingespeist (47),** der Strom an einen **Transformator (54)** weitergeleitet.

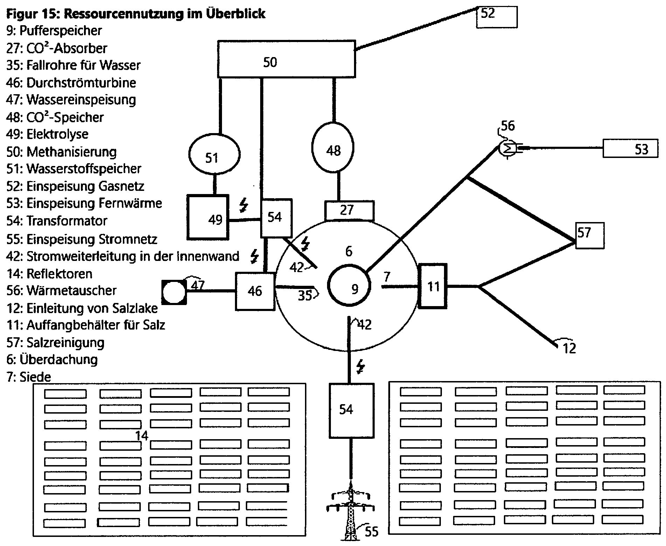

### Figur 15: Ressourcennutzung im Überblick

Der Strom aus der **Stromweiterleitung in der Innenwand (42)** wird an **Transformatoren (54)** abgegeben und steht dann für die **Einspeisung in das Stromnetz (55)** zur Verfügung oder zur weiteren Verarbeitung in der **Elektrolyse (49)**. Dort wird Wasserstoff (H²) hergestellt und an den **Wasserstoffspeicher (51)** oder direkt an die **Methanisierung (50)** abgegeben. Diese bezieht ihren zweiten Rohstoff, das CO², aus einem **CO²-Speicher (48),** der vom **CO²-Absorber (27)** versorgt wird. Überschüssige Energie im **Pufferspeicher (9)** wird über einen **Wärmetauscher (56)** an die **Einspeisung Fernwärme (53)** in das Fernwärmenetz abgegeben. Das Salz aus der **Siede (7)** im **Auffangbehälter für Salz (11)** kann über die **Einleitung von Salzlake (12)** in das Meer entsorgt oder in der **Salzreinigung (57)** weiter durch die Abwärme des **Pufferspeichers (9)** gesiedet werden. Dadurch ist es als Rohstoff für verschiedene Industrien einsetzbar.

Standorte für die Nutzung des Umweltkraftwerkes liegen idealiter in Meeresnähe und haben eine hohe Insolation oder heißes Tiefenwasser als Energiequelle. Die Nutzung von Klärwasser und anschließende Einspeisung des Wassers in Flüsse bei Kompostierung der Klärschlämme scheint möglich. Weiterhin könnten einige Komponenten auch in bestehende Industrieprozesse integriert werden (Ersatz von Schornsteinen und Kühltürmen zum Beispiel).

## Patentansprüche

1. **Hauptanspruch**
**Der Anspruch umfasst das Umweltkraftwerk in der dargelegten Form, mit den Bestandteilen 1-58 in beliebiger Größe und Anzahl der einzelnen Komponenten** - **in jeglicher Kombination oder Verkettung der Bauteile.**

2. **Aufwindkraftwerk in Kombination mit CO²-Abspaltung**
Die besondere Ausführung liegt hierbei in der Nutzung des Aufwindeffektes zur Reduktion des energetischen Aufwandes der Luftansaugung in herkömmlichen CO²-Abscheidern.

3. **Aufwindkraftwerk und Siede**
Die besondere Ausführung liegt hier darin begründet, dass durch die Nutzung einer Siede (7) der Aufwindeffekt verstärkt wird. Dadurch wird die Energieerzeugung optimiert.

4. **Aufwindkraftwerk mit Siede und Kondenswasserbehälter mit Durchflußturbine** Durch die Nutzung des Kondenswasserbehälters mit Löchern (32) wird das in der Siede kondensierte Wasser im Wasserauffangbehälter gesammelt und kann über die **Fallrohre für das Wasser in der Innenwand (35)** zur weiteren Stromerzeugung in der **Durchströmturbine (46)** verwandt werden. Dies ermöglicht die Nutzung als Trinkwasser und optimiert die Stromerzeugung.

5. **Aufwindkraftwerk und Nutzung von Parabolrinnen zur Erhitzung** Durch die Nutzung von Reflektoren (14) in Form von Parabolrinnen entgegen einer überdachten Fläche als Wärmekollektor wird der Flächenbedarf eines herkömmlichen Aufwindkraftwerkes reduziert. Gleichzeitig wird durch die Nutzung eines **Pufferspeichers (9)** ein gesteuerter Dauerbetrieb ermöglicht.

6. **CO²-Abspaltung und Produktion von methanisiertem Wasserstoff in Kombination aus Strom am Umweltkraftwerk**
Die Kombination aus Aufwindkraftwerk und CO²-Absorber (27) mit Elektrolyse (49) und Methanisierung (50) ermöglicht es, die Energie des Aufwindeffektes für die CO²-Abspaltung zu nutzen und sie gleichzeitig in Form von Methanisiertem Wasserstoff in das Erdgasnetz abzugeben.

7. **Nutzung von Vertikalrotoren zur Energiegewinnung an Türmen**
Die verdrillten Savonius-Rotoren (38) am Aufwindkraftwerk mit horizontalem Ring stellen eine neue Form der Windenergieerzeugung dar. Diese können auch an anderen Türmen verbaut werden.

8. **Dampfturbine im Aufwindkraftwerk**
Die Kombination aus Siede (7) und Aufwindkanal (30) ermöglicht den Einsatz einer Dampfturbine im Aufwindkanal.

9. **Nutzung von Blitzenergie**
Die Nutzung von Blitzenergie in Kombination mit Siede, Meerwasserbehälter, Dampfturbine, Aufwindkanal, Kondenswasserbehälter, Wasserauffangbehälter und Durchströmturbine stellt ein Novum dar.

10. **Aufwindkraftwerk und Nutzung von Erdwärme**
Die Nutzung von Erdwärme in Kombination mit Pufferspeicher und Aufwindkraftwerk ermöglicht einen kontinuierlichen Betrieb der Anlage und eine Einspeisung in das Fernwärmenetz.
